# EUROPÄISCHE PATENTSCHRIFT

(11) **EP 0 647 809 B1**
(45) Veröffentlichungstag und Bekanntmachung des Hinweises auf die Patenterteilung: **21.05.1997**
(21) Anmeldenummer: 94114273.9
(22) Anmeldetag: 10.09.1994
(51) Int. Cl.: F16K 31/04, F16K 41/02

(54) **Verbindung zwischen einer Dreh- oder Schwenkarmatur und einem Drehantrieb**
Connection between a rotating or swivelling valve and a rotating actuator
Connexion entre une soupape tournante ou pivotante et une commande tournante

(30) Priorität: 13.09.1993 DE 4330819
(43) Veröffentlichungstag der Anmeldung: 12.04.1995
(73) Patentinhaber: ITT Richter Chemie-Technik GmbH, D-47906 Kempen (DE)
(72) Erfinder: Hatting, Paul, D-47906 Kempen (DE); Naasner, Günter, D-47906 Kempen (DE)
(74) Vertreter: COHAUSZ HASE DAWIDOWICZ & PARTNER

(56) Entgegenhaltungen:
- EP-A- 0 123 421
- EP-A- 0 353 158
- DE-A- 2 438 875
- DE-A- 2 530 347

## Beschreibung

Die Erfindung betrifft eine Verbindung zwischen einer eine Armaturenwelle aufweisenden Dreh- oder Schwenkarmatur und einem eine Ausgangswelle aufweisendem Drehantrieb mit einem Verbindungsgehäuse nach dem Oberbegriff von Anspruch 1.

Die deutsche Offenlegungsschrift 24 38 875 betrifft eine Absperreinrichtung zum Einbau in die Abgasleitung von Gasfeuerstätten, die auch eine Verbindung nach dem Oberbegriff von Anspruch 1 umfaßt.

Es ist bekannt, daß zur Fernbetätigung von Ventilen, insbesondere Dreh- oder Schwenkarmaturen, diese mit einem elektrischen, pneumatischen oder sonstigem Stellantrieb versehen sind. Der Antrieb ist in der Regel über ein Zwischenteil (Laterne) mit dem Armaturengehäuse verbunden. Das Zwischenteil ist meist als Gehäuse ausgebildet, das mittels Schraubverbindungen am Gehäuse des Antriebs und der Armatur befestigt wird. Das die Ausgangswelle des Antriebs mit der Armaturenwelle verbindende Kupplungsteil, wird üblicherweise mit den Wellenenden verschraubt, verstiftet oder lose gesteckt verbunden und unterliegt somit konstruktionsbedingt störenden Fertigungstoleranzen.

Ventile herkömmlicher Bauart müssen auch gegen sehr aggressive und stark ätzende Stoffe und große Drücke hinreichende Dichtigkeit besitzen. Aus diesem Grund wird die Armaturenwelle meist mit Stopfbuchspackungen gegen einen Austritt des Fluids abgedichtet. Die Dichtringe dieser Stopfbuchspackungen werden entweder über eine Stopfbuchsbrille und entsprechende Nachstellschrauben oder über eine zentrale Stopfbuchsmutter gespannt.

Die Stopfbuchsbrille oder die Stopfbuchsmutter liegen entweder direkt auf dem Druckring auf oder sie spannen ein Federpaket, das ein gewisses Nachpressen der Stopfbuchse ohne äußeren Eingriff ermöglicht.

Die zentrale Stopfbuchsmutter wirkt entweder über ein Außengewinde mit dem Armaturengehäuse oder über ein Innengewinde mit der Armaturenwelle zusammen. Die Stopfbuchsmutter auf der Armaturenwelle wird dabei in der Regel mit einer Kontermutter versehen, um ein unbeabsichtigtes Lösen der Stopfbuchsmutter von der Armaturenwelle zu verhindern. Eine Sicherung gegen Lösen der Mutter ist auch in jedem Fall erforderlich, da zwischen der mitdrehenden Mutter und den stehenden Packungsringen eine Relativbewegung stattfindet.

Die entscheidenden Nachteile der heute bekannten Ventil-Stellantriebverbindungen sind durch die von der Konstruktion abhängigen sehr engen Fertigungstoleranzgrenzen der die Antriebs- und Armaturenwelle verbindenden Teile, insbesondere des Kupplungsteils, gegeben.

Auch ist die Art der Pressung der abdichtenden Stopfbuchspakkung nur ungenügend gelöst. So ist ein unverhältnismäßig großer Aufwand nötig um eine Arretierung der Stopfbuchsmutter zu gewährleisten. Auch läßt sich ein nach längerer Betriebsdauer notwendiges Nachspannen der Stopfbuchsmutter bei den bekannten Konstruktionen nur schwer durchführen, wobei oft der gesamte Stellantrieb demontiert werden muß, was einen Produktionsausfall zur Folge haben kann.

Aufgabe der Erfindung ist es, die Verbindung von Stellantrieb und Ventil mit möglichst einfachen Mitteln zu realisieren, wobei die verwendeten Teile keinen hohen Toleranzforderungen unterliegen und ein einfaches Nachspannen der Stopfbuchsenmutter, auch während des Betriebs gewährleistet wird.

Die Aufgabe wird erfindungsgemäß gemäß den Merkmalen von Anspruch 1 gelöst. Die Erfindung betrifft daher eine Verbindung zwischen einer eine Armaturenwelle aufweisenden Dreh- oder Schwenkarmatur und einem eine Ausgangswelle aufweisenden Drehantrieb mit einem Verbindungsgehäuse, das einerseits an der Armatur und andererseits dem Antrieb befestigt ist und in das das äußere Ende der Armaturenwelle hineinragt, wobei dieses äußere Ende durch ein Kupplungsteil mit der Ausgangswelle des Antriebs lösbar verbunden ist, welche dadurch gekennzeichnet ist, daß am Kupplungsteil ein Federelement gelagert ist, das das Kupplungsteil in Richtung der Armatur drückt und daß das Kupplungsteil in der der Armatur zugewandten Stirnseite eine, insbesondere zweite, Ausnehmung aufweist, in der eine Mutter formschlüssig einliegt, die auf der Armaturenwelle aufgeschraubt ist.

Der besondere Vorteil dieser Anordnung liegt im einfachen Ausgleich von Fertigungstoleranzen bei den verwendeten Teilen, insbesondere dem Kupplungsteil. Auch verhindert die Anordnung eines Federelementes ein Verrutschen des Kupplungsteils bei unterschiedlichen Installationslagen. Bei Wärmeausdehnungen und Maßveränderungen durch Verschleiß, wirkt das Federelement ausgleichend, was zu einer höheren Betriebssicherheit und längeren Lebensdauer des Ventils beiträgt.

Das Federelement wird bevorzugt koaxial auf dem wellenförmigen, der Armatur abgewandten Ende des Kupplungsteils gelagert. Dabei ist das Federelement vorzugsweise eine Schraubendruckfeder. Dies hat den Vorteil, daß die Schraubendruckfeder über die Welle geschoben und von dieser in Position gehalten wird. Eine zusätzliche Halterung oder Führung der Feder ist somit nicht notwendig. Vorzugsweise stützt sich das Federelement mit einem Ende an dem Kupplungsteil und mit dem anderen Ende an der der Armatur zugewendeten Seite des Antriebs ab. Das Federelement wird somit durch nur zwei ohnehin für die Konstruktion notwendige Teile eingespannt.

Das für die Verbindung von Antriebs- und Armaturenwelle notwendige Kupplungsteil weist in seiner erfindungsgemäßen Ausbildung eine in seiner der Armatur zugewandten Stirnseite erste Ausnehmung auf, in die das äußere Ende der Armaturwelle formschlüssig einliegt. Die Ausnehmung ist vorzugsmäßig als Nut mit zwei parallelen Seiten ausgebildet, die sich leicht durch Fräsen in das Werkstück einarbeiten läßt. Im Zusammenspiel mit dem Federelement ist somit eine einfache und sichere Verbindung zwischen Antriebs- und Armaturenwelle realisiert. Die herkömmlich zur Verbindung des Kupplungsteils und der Armaturenwelle benötigten Verbindungsschrauben und -stifte können entfallen.

Um eine sichere Arretierung der Stopfbuchsmutter zu gewährleisten, weist das Kupplungsteil eine zweite Ausnehmung auf, in die die Stopfbuchsmutter formschlüssig einliegt. Durch diese zweite Ausnehmung, die vorzugsweise ebenfalls als Nut mit zwei parallelen Seiten ausgebildet wird, ist die Stopfbuchsmutter verdrehsicher mit der Armaturenwelle gelagert und es entfallen die herkömmlich benötigten Kontermuttern oder andere Verdrehsicherungen. Wird die Stopfbuchsenmutter zum Nachspannen verdreht, so gleicht das Federelement den Gewindehub aus. Das Kupplungsteil wird zum Nachspannen in Richtung des Stellantriebs verschoben, so daß die Stopfbuchsmutter frei zugänglich ist.

In einer favorisierten Ausgestaltung, liegt die erste Ausnehmung in ihrer Längserstreckung rechtwinklig zur Längserstreckung der zweiten Ausnehmung. Dies führt, auch unter Beanspruchung, zu einer gleichmäßigen Verteilung der Radialkräfte im Kupplungsteil und eine radiale Verschiebung der Kupplung in Richtung der freien Nutöffnungen wird verhindert. Jedoch ist auch jede mögliche Winkelstellung der zwei Ausnehmungen zueinander vorstellbar.

Die erste Ausnehmung ragt bei der erfindungsmäßigen Gestaltung des Kupplungsteils tiefer in dieses hinein als die zweite Ausnehmung. Durch dieses besondere Merkmal werden mit nur einem Kupplungsteil mehrere vorteilhafte Funktionen ausgeübt. So wird nicht nur ein sicheres Führen der Armaturenwelle ermöglicht, auch wird gleichzeitig eine feste Arretierung der Stopfbuchsmutter gewährleistet. Das Gewinde der Stopfbuchsmutter und das dazu korrespondierende Gewinde des Kupplungsteils wird bei dieser Ausführung unter Last nicht beansprucht, so daß die Stopfbuchsmutter auch nach längerem Betrieb noch problemlos verstellbar ist.

Die Erfindung wird nachstehend anhand der Zeichnungen näher erläutert.

Es zeigen:
- Figur 1:: Ein Kugelhahn mit Stellantrieb und dazugehörigem Verbindungselement;
- Figur 2:: Ein Kupplungsteil.

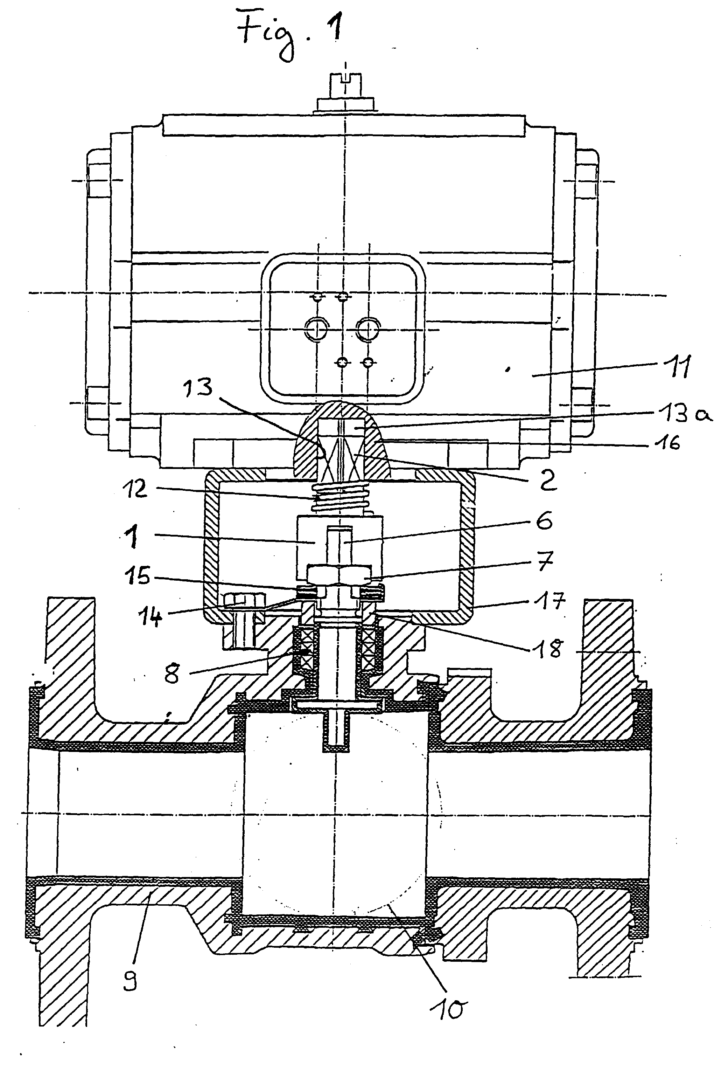

Die Figur 1 zeigt einen Kugelhahn 9 der an einem Stellantrieb 11 befestigt ist. An dem Kugelhahn 9 ist dabei mittels Schrauben 14 das Verbindungselement 17 in Form eines Gehäuses angelagert, welches seinerseits über nicht dargestellte Schrauben an dem Stellantrieb befestigt ist.

Die Ventilkugel 10 wird über die Armaturenwelle 6, das Kupplungsteil 1,2 und die Antriebswelle 16 des Stellantriebs 11 verstellt. Hierbei ragt das obere zapfenförmige Ende des Kupplungsteils 1,2 als Vielflach in eine entsprechend geformte Ausnehmung 13 in die Antriebswelle 16 des Stellantriebs formschlüssig hinein, wobei die Ausnehmung 13 in ihrer Höhe größer gewählt ist als die Höhe des zapfenförmigen Endes 2, so daß ein oberer Freiraum 13a verbleibt.

Über den dem Stellantrieb zugewandten Bereich 2 des Kupplungsteils 1,2 ist ein Federelement 12, insbesondere eine Schraubendruckfeder, koaxial gelagert. Die Hubhöhe des Federelementes 12 und die Länge des Bereichs 2 des Kupplungsteils 1,2 sind also so bemessen, daß trotz des in der Antriebswelle des Stellantriebs einliegende Bereich 2 des Kupplungsteils 1,2, der Freiraum 13a vorhanden ist, in den sich das Kupplungsteil 1,2 bei Bedarf, insbesondere zum Nachspannen der Stopfbuchsmutter 7, weiter einführen läßt.

Der Bereich 2 besitzt im Ausführungsbeispiel vorzugsweise einen quadratischen Querschnitt und liegt formschlüssig in der Antriebswelle 16 des Stellantriebs 11 ein. Es ist jedoch auch möglich den Bereich 2 mit einer nicht quadratischen Querschnittsform auszubilden, sofern der Bereich 2 mit der Antriebswelle 16 formschlüssig so zusammenwirkt, daß das Kupplungsteil 1,2 von der Antriebswelle 16 mit einem Drehmoment beaufschlagt werden kann.

Der Bereich 1 des Kupplungsteils 1,2, auch Kupplungskopf 1 genannt, weist einen größeren Querschnitt auf als das Federelement 12, so daß sich das Federelement 12 zwischen dem Kupplungskopf 1 und der Unterseite des Antriebs oder der Innenseite des Verbindungsgehäuses abstützen kann.

In einer ersten in ihrer Längserstreckung quer zur Achse der Armaturenwelle 6 liegenden Ausnehmung 3 des Kupplungskopfes 1, die insbesondere als Nut ausgebildet ist, liegt das dem Ventil abgewandte Ende der Armaturenwelle 6 formschlüssig ein. Das dem Ventil abgewandte Ende der Armaturenwelle 6 weist vorzugsweise einen rechteckförmigen Querschnitt auf, dessen zwei parallele Längsseiten paßgenau an den Längsseiten der Ausnehmung 3 des Kupplungskopfes 1 anliegen. Dadurch ist gewährleistet, daß das Kupplungsteil 1,2 die Armaturenwelle 6 mit einem Drehmoment spielarm beaufschlagen kann.

In eine zweite Ausnehmung 4 des Kupplungskopfes 1, die ebenfalls in ihrer Längserstreckung quer zur Achse der Armaturenwelle 6 liegt und als Nut ausgebildet ist, liegt die Stopfbuchsmutter 7 formschlüssig ein. Die Ausnehmung 3 des Kupplungskopfes 1 ragt tiefer in diesen ein, als die Ausnehmung 4. Dabei ist bei der Tiefengestaltung der Ausprägung 3 darauf zu achten, daß bei vollständig auf die Armaturenwelle 6 aufgeschraubter Stopfbuchsmutter 7, die Stopfbuchsmutter 7 noch in der Ausnehmung 4 einliegt. Ein unbeabsichtigtes Verdrehen der Stopfbuchsmutter 7 auf der Armaturenwelle 6 ist somit aufgrund der besonderen Ausbildung des Kupplungskopfes 1 ausgeschlossen.

Die Stopfbuchsmutter 7 liegt auf der dem Ventil 9 zugewandten Seite auf Federelementen 15, insbesondere Tellerfedern, auf und druckbeaufschlagt über diese das Stopfbuchspaket 8. Die Tellerfedern 15 übernehmen eine Gleitlagerfunktion zwischen der Stopfbuchsmutter 7, dem Druckring 18 und der Stopfbuchspackung 8.

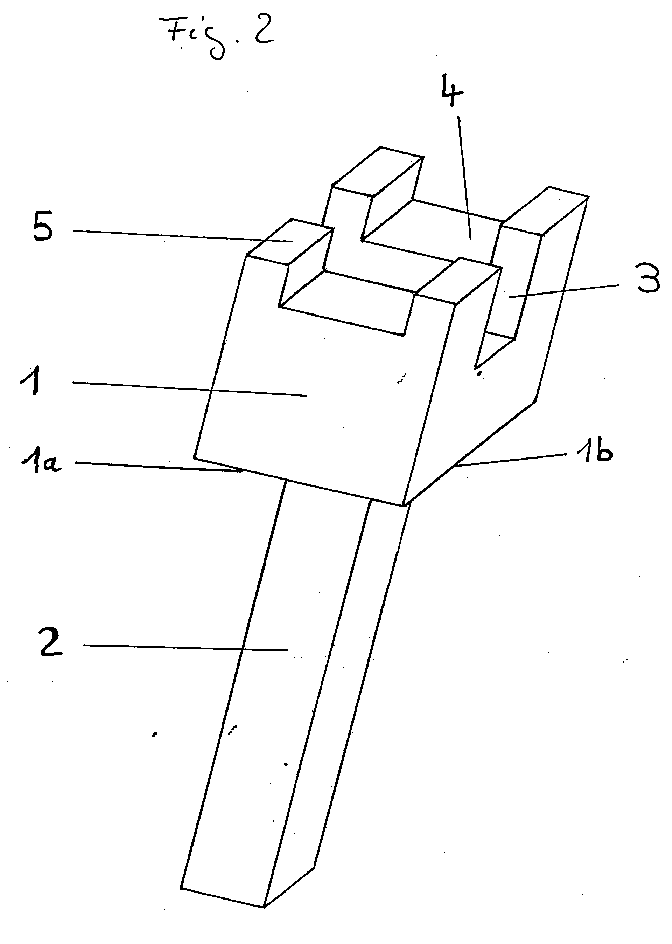

Figur 2 zeigt das Kupplungsteil bestehend aus dem Kupplungskopf 1 und dem Bereich 2. Der Kupplungskopf 1 weist zwei Ausnehmungen 3 und 4 an seiner Stirnseite 5 auf.

In einer favorisierten Ausführungsform weisen der Kupplungskopf 1 und der Bereich 2 einen rechteckförmigen, insbesondere quadratischen Querschnitt auf, wobei die Querschnittsfläche des Kupplungskopfes 1 größer ist als die des Bereichs 2. Der Kupplungskopf 1 kann jedoch auch eine zylindrische, kugelförmige oder sonstige Gestalt aufweisen, sofern sich die Schraubendruckfeder 12 mit ihrem einen Ende noch auf dem Kupplungskopf 1 abstützen kann.

Die Schraubendruckfeder 12 wird auf dem Bereich 2 koaxial gelagert und stützt sich mit ihrem einen Ende an dem Kupplungskopf 1 ab. Der Außendurchmesser der Schraubenfeder 12 ist in der bevorzugten Ausführung kleiner als die Seitenlängen 1a,1b des Kupplungskopfes 1.

Die Ausnehmungen 3 und 4 an der Stirnseite 5 des Kupplungskopfes 1 sind aus konstruktionstechnischen Gründen vorzugsweise als Nuten mit zwei jeweils parallelen Seiten ausgebildet. Solche Nuten lassen sich relativ leicht in ein Teil einfräsen und sind somit sehr kostengünstig herzustellen. Aus Stabilitätsgründen sind die Nuten rechtwinklig zueinander angeordnet, können jedoch auch unter einer beliebigen Winkelstellung zueinander angeordnet sein. Die Ausnehmung 3 ist dabei tiefer in den Kupplungskopf 1 eingearbeitet, insbesondere gefräst. Die Seitenflächen der Ausnehmung 3 haben konstruktionsbedingt einen kleineren Abstand voneinander als die Seitenflächen der Ausnehmung 4, da die Armaturenwelle 6 einen kleineren Außendurchmesser aufweist, als die Stopfbuchsmutter 7.
Das Verhältnis der Außendurchmesser von Armaturenwelle 6 und Stopfbuchsmutter 7 ist den Abmessungen der Ausnehmungen 3 und 4 so angepaßt, daß einerseits die Stopfbuchsmutter formschlüssig und verdrehsicher in der Ausnehmung 4 einliegt und andererseits das Ende der Armaturenwelle 6 ebenfalls formschlüssig und verdrehsicher in der Ausnehmung 3 einliegt.

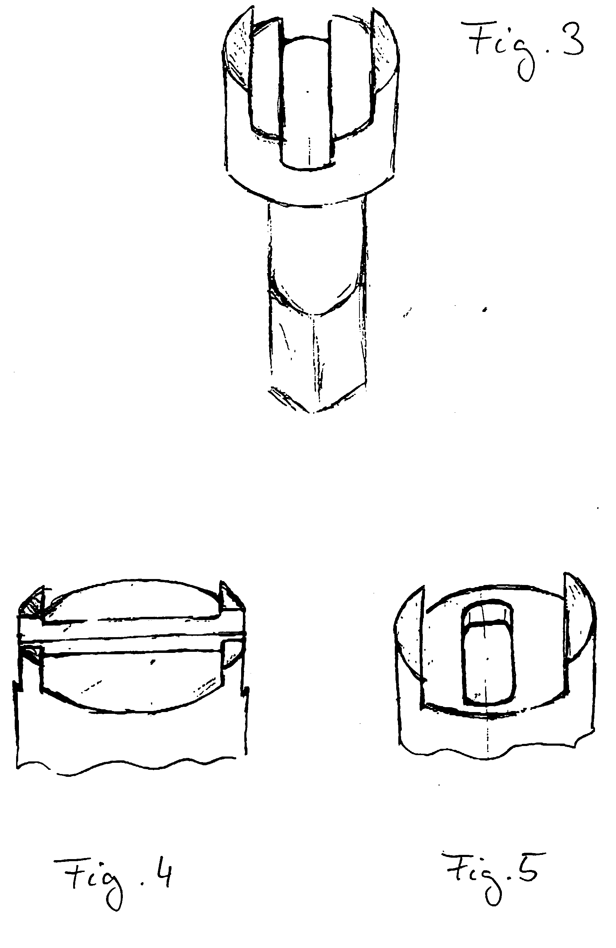

Figur 3 zeigt eine weitere Ausführung des Kupplungsteils 1,2. Der Kupplungskopf 1 und ein Teil des Bereichs 2 weist dabei zylindrische Gestalt auf. Der Teil des Bereichs 2, der mit der Antriebswelle 16 des Stellantriebs 11 zusammenwirkt, ist als Vierflach ausgebildet. Eine weitere Möglichkeit besteht darin, diesen Bereich 2 als Vielflach auszubilden. Die Ausnehmungen 3 und 4 liegen parallel zueinander, können jedoch wie in Figur 4 dargestellt auch rechtwinklig zueinander sein. Die Ausnehmung 3 ragt dabei tiefer in den Kupplungskopf 1 hinein als die Ausnehmung 4.

Figur 5 zeigt eine möglich Ausführungsform des Kupplungskopfes 1 des Kupplungsteils 1,2. Die Ausnehmung 3 erstreckt sich in dieser Ausführung in ihrer Längsausdehnung nicht über den gesamten Querschnitt des Kupplungskopfes 1. Wie in Figur 5 dargestellt, liegen die Ausnehmungen 3 und 4 parallel zueinander, können jedoch wie die Ausführungsbeispiele, die in den Figuren 3 und 4 dargestellt sind, jede Winkelstellung zueinander aufweisen.

## Patentansprüche

1. Verbindung zwischen einer eine Armaturenwelle (6) aufweisenden Dreh- oder Schwenkarmatur (9) und einem eine Ausgangswelle (16) aufweisenden Drehantrieb (11) mit einem Verbindungsgehäuse (17), das einerseits an der Armatur (9) und andererseits dem Antrieb (11) befestigt ist und in das das äußere Ende der Armaturenwelle (6) hineinragt, wobei dieses äußere Ende durch ein Kupplungsteil (1,2) mit der Ausgangswelle (16) des Antriebs (11) lösbar verbunden ist, **dadurch gekennzeichnet,** daß am Kupplungsteil (1,2) ein Federelement (12) gelagert ist, das das Kupplungsteil (1,2) in Richtung der Armatur (9) drückt und daß das Kupplungsteil (1,2) in der der Armatur (9) zugewandten Stirnseite (5) eine, insbesondere zweite, Ausnehmung (4) aufweist, in der eine Mutter (7) formschlüssig einliegt, die auf der Armaturenwelle (6) aufgeschraubt ist.

2. Vorrichtung nach Anspruch 1, **dadurch gekennzeichnet,** daß das Federelement (12) koaxial auf dem der Armatur (9) abgewandten Ende des Kupplungsteils (1,2) gelagert ist.

3. Vorrichtung nach Anspruch 1 oder 2, **dadurch gekennzeichnet,** daß das Federelement (12) eine Schraubendruckfeder ist.

4. Vorrichtung nach einem der vorherigen Ansprüche, **dadurch gekennzeichnet,** daß das Kupplungsteil (1) einstückig ist.

5. Vorrichtung nach einem der vorherigen Ansprüche, **dadurch gekennzeichnet,** daß das Federelement (12) sich mit einem Ende an dem Kupplungsteil (1,2) und mit dem anderen Ende an der Unterseite des Antriebs (11) abstützt.

6. Vorrichtung nach einem der vorherigen Ansprüche, **dadurch gekennzeichnet,** daß das Kupplungsteil (1) in der der Armatur (9) zugewandten Stirnseite (5) eine erste Ausnehmung (3) aufweist, in der das äußere Ende der Armaturenwelle (6) formschlüssig einliegt.

7. Vorrichtung nach Anspruch 6, **dadurch gekennzeichnet,** daß die Armaturenwelle (6), insbesondere als Zweiflach, zwei zueinander parallele Seitenflächen aufweist, die in der nutenförmigen Ausnehmung (3) des Kupplungsteils (1) formschlüssig einliegt.

8. Vorrichtung nach einem der vorherigen Ansprüche, **dadurch gekennzeichnet,** daß die Mutter (7) insbesondere über Tellerfedern (15) ein Stopfbuchspaket (8) druckbeaufschlagt.

9. Vorrichtung nach einem der vorherigen Ansprüche, **dadurch gekennzeichnet,** daß die zweite Ausnehmung (4) nutenförmig ist und mit ihren zwei zueinander parallelen Seitenflächen an zwei Seiten der Mutter (7) anliegt.

10. Vorrichtung nach einem der vorherigen Ansprüche, **dadurch gekennzeichnet,** daß die erste Ausnehmung (3) in ihrer Längserstreckung rechtwinklig zur Längserstreckung der zweiten Ausnehmung (4) liegt.

11. Vorrichtung nach einem der vorherigen Ansprüche, **dadurch gekennzeichnet,** daß die erste Ausnehmung (3) tiefer in das Kupplungsteil (1) hineinragt als die zweite Ausnehmung (4).

12. Vorrichtung nach einem der vorherigen Ansprüche, **dadurch gekennzeichnet,** daß die nutenförmige Ausnehmung (3,4) in ihrer Längserstreckung quer zur Achse der Armaturenwelle (6) liegt.

## Claims

1. Link between a rotary or swivel valve (9) having a valve shaft (6) and a rotary drive (11) having an output shaft (16) with a interconnecting housing (17), mounted on one side to the valve (9) and on the other side to the drive (11), into which the outer end of the valve shaft (6) projects, the said outer end being joined by a detachable coupling part (1,2) to the output shaft (16) of the drive (11), **characterized in that** a spring element (12) is seated on the coupling part (1,2) and pushes the coupling part (1,2) toward the valve (9), and that the coupling part (1,2) has a recess, more particularly a second recess (4) in the end (5) facing toward the valve (9), accommodating a positively locked nut (7) that is screwed onto the valve shaft (6).

2. Device according to Claim 1, **characterized in that** the spring element (12) is coaxially seated on the end of the coupling part (1,2) facing away from the valve (9).

3. Device according to Claim 1 or 2, , **characterized in that** the spring element (12) is a helical compression spring.

4. Device according to any of the preceding claims, **characterized in that** the coupling part (1) is one-piece.

5. Device according to any of the preceding claims, **characterized in that** one end of the spring element rests on the coupling part (1,2) and the other end on the underside of the drive (11).

6. Device according to any of the preceding claims, **characterized in that,** in the end facing the valve (9), the coupling part (1) has a first recess (3) in which the outer end of the valve shaft (6) is positively locked.

7. Device according to Claim 6, **characterized in that** the valve shaft (6), particularly as a pivot with cheeks, has two mutually parallel side faces that lock positively into the groove-shaped recess (3) of the coupling part (1).

8. Device according to any of the preceding claims, **characterized in that** the nut (7) pressurizes a stuffing box packing, particularly by means of cup springs (15).

9. Device according to any of the preceding claims, **characterized in that** the second recess (4) is groove-shaped and with its two mutually parallel side faces contacts with two sides of the nut (7).

10. Device according to any of the preceding claims, **characterized in that** the longitudinal dimension of the first recess (3) lies at right angles to that of the second recess (4).

11. Device according to any of the preceding claims, **characterized in that** the first recess (3) extends deeper into the coupling part (1) than does the second recess (4).

12. Device according to any of the preceding claims, **characterized in that** the longitudinal dimension of the groove-shaped recess (3,4) lies perpendicular to the axis of the valve shaft (6).

## Revendications

1. Liaison entre une robinetterie tournante ou pivotante (9), présentant un axe de robinetterie (6), et une commande tournante (11) présentant un axe de sortie (16) avec un carter de liaison (17) qui est fixé d'une part à la robinetterie (9) et d'autre part à la commande (11) et dans lequel fait saillie l'extrémité extérieure de l'axe de robinetterie (6), cette extrémité extérieure étant reliée de manière amovible, par une pièce d'accouplement (1, 2), à l'axe de sortie (16) de la commande (11),
caractérisée en ce qu'un élément à ressort (12) est monté sur la pièce d'accouplement (1, 2) et presse la pièce d'accouplement (1, 2) en direction de la robinetterie (9) et en ce que la pièce d'accouplement (1,2 ) présente, dans la face frontale (5) tournée vers la robinetterie (9), en particulier un second évidement (4) dans lequel est logé, à engagement positif, un écrou (7) qui est vissé sur l'axe de robinetterie (6).

2. Dispositif selon la revendication 1,
caractérisé en ce que l'élément à ressort (12) est monté coaxialement sur l'extrémité de la pièce d'accouplement (1, 2) écartée de la robinetterie (9).

3. Dispositif selon la revendication 1 ou 2,
caractérisé en ce que l'élément à ressort (12) est un ressort hélicoïdal de compression.

4. Dispositif selon l'une des revendications précédentes,
caractérisé en ce que la pièce d'accouplement (1) est monobloc.

5. Dispositif selon l'une des revendications précédentes,
caractérisé en ce que l'élément à ressort (12) s'appuie par une extrémité contre la pièce d'accouplement (1, 2) et par l'autre extrémité contre la face inférieure de la commande (11).

6. Dispositif selon l'une des revendications précédentes,
caractérisé en ce que la pièce d'accouplement (1) présente, dans la face frontale (5) tournée vers la robinetterie (9), un premier évidement (3) dans lequel est logée, à engagement positif, l'extrémité extérieure de l'axe de robinetterie (6).

7. Dispositif selon la revendication 6,
caractérisé en ce que l'axe de robinetterie (6) présente deux surfaces latérales parallèles, en particulier sous forme de corps cylindrique à deux plats opposés, qui sont logées, à engagement positif, dans l'évidement (3) en forme de rainure de la pièce d'accouplement (1).

8. Dispositif selon l'une des revendications précédentes,
caractérisé en ce que l'écrou (7) agit en pression, en particulier par l'intermédiaire de ressorts Belleville (15), sur un empilage presse-étoupe (8).

9. Dispositif selon l'une des revendications précédentes,
caractérisé en ce que le second évidement (4) est en forme de rainure et est adjacent, par ses deux surfaces latérales parallèles, à deux faces de l'écrou (7).

10. Dispositif selon l'une des revendications précédentes,
caractérisé en ce que le premier évidement (3) se trouve, par son extension longitudinale, orthogonal à l'extension longitudinale du second évidement (4).

11. Dispositif selon l'une des revendications précédentes,
caractérisé en ce que le premier évidement (3) fait saillie dans l'élément d'accouplement (1) plus profondément que le second évidement (4).

12. Dispositif selon l'une des revendications précédentes,
caractérisé en ce que l'évidement (3, 4) en forme de rainure s'étend, par son extension longitudinale, transversalement à l'axe de l'axe de robinetterie (6).
